# EUROPÄISCHE PATENTSCHRIFT

(11) **EP 3 971 433 B1**
(45) Veröffentlichungstag und Bekanntmachung des Hinweises auf die Patenterteilung: **18.09.2024**
(21) Anmeldenummer: 21207171.6
(22) Anmeldetag: 13.02.2020
(51) Int. Cl.: F16D 3/40

(54) **ZAPFENKREUZ MIT EINEM TEMPERATURSENSOR UND KREUZGELENK ENTHALTEND EIN SOLCHES ZAPFENKREUZ**
UNIVERSAL JOINT SPIDER WITH A TEMPERATURE SENSOR AND UNIVERSAL JOINT WITH SUCH A SPIDER
CROISILLON À TOURILLONS AVEC UN CAPTEUR DE TEMPÉRATURE ET JOINT DE CARDAN COMPORTANT UN TEL CROISILLON

(30) Priorität: 15.02.2019 DE 102019202048
(43) Veröffentlichungstag der Anmeldung: 23.03.2022
(62) Teilanmeldung aus: 20157147.8
(73) Patentinhaber: Off-Highway Powertrain Services Germany GmbH, 53797 Lohmar (DE)
(72) Erfinder: Kisla, Timur Mehmet, 53844 Troisdorf (DE); Krüger, Max, 53797 Lohmar (DE)
(74) Vertreter: Grünecker Patent- und Rechtsanwälte PartG mbB

(56) Entgegenhaltungen:
- EP-A1- 3 599 389
- WO-A1-96/28665
- US-A1- 2001 033 234
- US-A1- 2014 188 353

## Beschreibung

Die vorliegende Erfindung liegt auf dem Gebiet der Antriebstechnik.

Bei der Übertragung eines Drehmoments in einem geknickten Wellenstrang kommen Gelenkwellen zum Einsatz. Mitunter sind diese Gelenkwellen mit einem zusätzlichen Längenausgleich versehen, welcher auch als Schiebestück bezeichnet wird.

Solche Gelenkwellen, die mit der vorliegenden Erfindung verbessert werden sollen, kommen auch zwischen Traktoren und davon gezogenen, geschobenen oder getragenen landwirtschaftlichen Arbeitsmaschinen zum Einsatz. Zwischen dem Traktor und der Arbeitsmaschine wird in der Regel eine Gelenkwelle mit zwei Kreuzgelenken und einer dazwischenliegenden, mehrteiligen Welle, die ein Wellenrohr sowie Segmente für den Längenausgleich verwirklicht, eingesetzt, um die Drehmoment-Übertragung davon unabhängig zu machen, welche Bewegung die Arbeitsmaschinen relativ zu dem Traktor bzw. der Zugmaschine ausführt.

Der vorliegenden Erfindung geht es insbesondere um die Verbesserung solcher Gelenkwellen.

Im Betrieb geht es darum, einen sich anbahnenden Verschleiß oder andere technische Probleme des Kreuzgelenkes frühzeitig zu erkennen. Hierzu hat es an Vorschlägen bisher nicht gefehlt. EP 1 775 492 B1 schlägt vor, eine fehlende Koaxialität zwischen der Mittelängsachse des Zapfens und einem dem Zapfen zugeordneten Wälzlager als Hinweis auf einen sich anbahnenden Verschleiß zu werten. Jedem Zapfen ist dazu ein Ultraschallsensor zugeordnet, der das radiale Spaltmaß zwischen der Außenumfangsfläche des Zapfens und einem in eine Zapfenbohrung hineinragenden Ultraschallsensor überwacht, der fest an einer Endkappe montiert ist, die ein fest vorgegebenes räumliches Verhältnis zu dem Wälzlager haben soll. Einen entsprechenden Vorschlag stellt auch EP 2 843 359 B1 vor.

Die US2014188353 offenbart ein Zapfenkreuz eines Kreuzgelenks, in dessen Innern ein Temperatursensor platziert ist.

Die vorliegende Erfindung will eine zuverlässige und kompakt bauende Möglichkeit zur Ermittlung eines sich anbahnenden Verschleißes an einem Zapfengelenk angeben.

Zur Lösung dieses Problems wird mit der vorliegenden Erfindung ein Zapfenkreuz mit den Merkmalen von Anspruch 1 vorgeschlagen. Dieses Zapfenkreuz hat erfindungsgemäß zumindest einen an dem Zapfenkreuz befestigten Temperatursensor.

Der Temperatursensor nach der vorliegenden Erfindung erfasst unmittelbar die Temperatur des Zapfenkreuzes. Üblicherweise erfasst der Temperatursensor die aktuelle Temperatur des das Zapfenkreuz bildenden Materials bzw. eines in der Basis des Zapfenkreuzes aufgenommenen Schmiermittels (in der Regel Fett).

Eine Temperaturerhöhung im Bereich des Zapfenkreuzes wird als Hinweis auf einen sich anbahnenden Verschleiß gewertet. Sich verschleißende Lager haben üblicherweise erhöhte Reibwerte. Auch kann es durch Fehlstellungen einzelner sich relativ zueinander bewegender Komponenten des Zapfenkreuzes zu einer erhöhten Verlustleistung im Zapfenkreuz kommen, durch welche die Temperatur erhöht wird. Solche Temperaturerhöhungen werden als Hinweis auf einen sich anbahnenden Verschleiß des Zapfenkreuzes gewertet.

Bevorzugt ist der Temperatursensor an der Basis befestigt. Er misst dementsprechend die Temperatur des die Basis ausbildenden Materials oder des in der Basis aufgenommenen Schmiermittels. Dabei sollte die Position der Temperaturmessung möglichst weit von dem Mittelpunkt der Basis entfernt liegen. Bevorzugt erstreckt sich der Temperatursensor bis in einen der Zapfen. Dort entsteht die Reibungswärme des Lagers. Regelmäßig ergibt sich dort eine erhöhte Temperatur, wenn die Lagerung der Zapfen nicht reibungsoptimiert eingestellt ist und/oder aus anderen Gründen, beispielsweise aufgrund einer Fehlstellung in der Gelenkwelle, eine erhöhte Verlustleistung auftritt.

Gemäß einer bevorzugten Weiterbildung der vorliegenden Erfindung umfasst der Temperatursensor mehrere Sensorelemente. Je eines der Sensorelemente ist bevorzugt je einem Zapfen des Zapfenkreuzes zugeordnet. Dementsprechend wird jeder Zapfen des Zapfenkreuzes hinsichtlich seiner aktuellen Temperatur durch ein entsprechendes Sensorelement überwacht. So kann in jedem der den Zapfen zugeordneten Lager frühzeitig ein Verschleiß erkannt werden.

Bevorzugt ist hierbei ein Sensorelement in einem in dem Zapfenkreuz ausgesparten Schmiermittelkanal angeordnet und dem Zapfen zugeordnet. Alternativ ist das Sensorelement am Außenumfang eines Zapfens angeordnet. Bei beiden Ausgestaltungen ist das Sensorelement jeweils einem der Zapfen zugeordnet. Die Anordnung in dem Schmiermittelkanal kann nahe des axialen Endes des Zapfens erfolgen. Die Anordnung erfolgt jedenfalls üblicherweise so, dass der Sensor umfänglich von einer Zapfenaufnahme oder einem anderen Kraftangriffspunkt an das Zapfenkreuz umgeben ist. Bei der alternativen Ausgestaltung, bei der sich das Sensorelement an dem Außenumfang des Zapfens befindet, liegt das Sensorelement jedenfalls außerhalb eines Mittelpunktes, in dem sich die Achsen der einzelnen Zapfen schneiden. Das Sensorelement befindet sich üblicherweise auch außerhalb der Basis, die von den Zapfen überragt ist. Dabei befindet sich das Sensorelement möglichst nahe an derjenigen Stelle, die zur Kraftübertragung das freie Ende des Zapfens umfänglich umgibt und/oder einspannt.

Die einzelnen Sensorelemente sind dabei bevorzugt jeweils für sich mit einer gemeinsamen Logik zur Verarbeitung von Signalen des Temperatursensors verbunden. Die Logik befindet sich üblicherweise mittig auf der Basis. Es hat sich gezeigt, dass in diesem Bereich die geringsten Temperaturänderungen bei einer Temperaturerhöhung im Bereich der Zapfen auftritt. So ist die Logik in einem verhältnismäßig kühlen Bereich des Zapfenkreuzes angeordnet.

Gemäß einer bevorzugten Weiterbildung der vorliegenden Erfindung ist jedes der Sensorelemente über eine Datenleitung mit der Logik datenmäßig verbunden. Bevorzugt ist die entsprechende Datenleitung abgedichtet durch das die Basis ausbildende Material hindurchgeführt. Die Datenleitung erstreckt sich von dem Schmiermittelkanal innerhalb der Basis bis zu der Außenseite des Zapfenkreuzes. Die Datenleitung ist üblicherweise für jedes der Sensorelemente zu dem Schnittpunkt der einander gegenüberliegenden Zapfen geführt, wo sich die Logik befindet.

Die Logik ist bevorzugt eine solche Logik, die einen Speicher aufweist. Dieser Speicher kann die Messsignale der einzelnen Sensorelemente über die Zeit speichern und damit den Temperaturverlauf abrufbar machen. Bevorzugt hat die Logik indes auch eine Auswerteeinheit, die die Signale des Sensorelementes auswertet und ein Ausgabesignal erzeugt, welches einen Störungszustand angibt. Bei einer besonders einfachen Ausgestaltung ist die Logik dabei so vorbereitet, dass diese nicht die Signale des Sensorelementes speichert, sondern lediglich das Ausgabesignal. Dieses Ausgabesignal kann ein binärer Wert sein, der entweder einen Zustand einer Störung oder einen Zustand ohne Störung als Störungszustand angibt. So kann beispielsweise der Speicher von außen angeregt und ausgelesen werden. In einer einfachen Ausgestaltung sind die Logik und der Speicher so ausgebildet, dass durch äußere Anregung lediglich einer Empfangseinheit mitgeteilt wird, ob ein kritischer Störungszustand vorliegt oder nicht. Diese Information kann beispielsweise auch durch eine Diode übermittelt werden, die unmittelbar auf der Logik aufsitzt und beispielsweise durch eine äußere Anfrage aktiviert wird. So kann beispielsweise bei einer äußeren Anfrage die Diode so geschaltet werden, dass diese eine Störung oder keine Störung als Störungszustand ausgibt.

Gemäß einer bevorzugten Weiterbildung der vorliegenden Erfindung ist jedem der Zapfen zumindest ein Sensorelement zugeordnet. Diese Ausgestaltung bietet die Möglichkeit, die Messsignale der einzelnen Sensorelemente miteinander zu vergleichen, insbesondere dann, wenn die Sensorelemente über Datenleitungen mit der Logik datenmäßig verbunden sind.

Die Logik zeigt bevorzugt einen Störungszustand an, wenn das Signal zumindest eines der Sensorelemente einen Toleranzwert überschreitet. Bei dieser Ausgestaltung kann konkret eine gewisse Temperaturdifferenz als Toleranzwert festgelegt werden. Die Berechnung eines Temperatur-Mittelwertes auf Basis der Sensorsignale hat den Vorteil, dass die Auswertung eines Störungszustandes unabhängig von der tatsächlichen Außentemperatur erfolgt. Allein die Temperaturdifferenz gegenüber diesem Mittelwert aufgrund erhöhter Reibung und damit Verschleiß an einem Zapfen wird als Hinweis auf einen Störungszustand ausgewertet. Mit dieser Weiterbildung lässt sich auf einfache Weise und mit geringem Aufwand das Zapfenkreuz im Betrieb daraufhin überwachen, ob übermäßiger Verschleiß an zumindest einem der Zapfen auftritt. Lediglich ein solcher Befund muss über die Logik ausgegeben bzw. angezeigt werden.

Die Logik muss nicht notwendigerweise auf der Basis des Zapfenkreuzes angeordnet sein. Vielmehr kann die Auswerteeinheit auch an einer anderen Stelle, beispielsweise in dem Wellenkörper einer Gelenkwelle aufgenommen sein, die an zumindest ein erfindungsgemäßes Zapfenkreuz anschließt. Die Logik kann auch auf einer Leiterplatte montiert sein, welche zumindest ein on-board darauf vorgesehenes Sensorelement trägt und anschließt, das die Temperatur des Zapfenkreuzes ermittelt. So sind die Logik und zumindest eines der Sensorelemente bevorzugt auf einer gemeinsamen Leiterplatte montiert. Ein in solcher Weise montiertes Sensorelement kann beispielsweise im Bereich der des Schnittpunktes der Mittellängsachsen der Zapfen außen an der Basis vorgesehen sein. Der Sensor kann beispielsweise ganz oder teilweise in einen mittleren Schmiermittelkanal eingesetzt sein. Bei einem on-board montierten Sensorelement entfällt der Verkabelungsaufwand für die Datenleitung.

Gemäß einer bevorzugten Weiterbildung ist eine Schutzabdeckung vorgesehen, die die Logik und/oder den Temperatursensor außenseitig abdeckt, sodass die Gelenkwelle außenseitig schmierendes Schmiermittel und/oder Feuchtigkeit und Verschmutzung nicht zu den elektronischen Bauteilen des erfindungsgemäßen Zapfenkreuzes gelangt. Die Schutzabdeckung kann durch eine Folie oder zumindest ein Schalenelement, welches regelmäßig aus Kunststoff gebildet ist, ausgeformt sein. Auch kann die Schutzabdeckung durch zwei, die Basis zwischen sich dichtend einschließende Schalenelemente gebildet sein.

Die vorliegende Erfindung wird nachstehend anhand von Ausführungsbeispielen in Verbindung mit der Zeichnung näher erläutert. In dieser zeigen:
Figur 1: eine perspektivische Seitenansicht eines ersten Ausführungsbeispiels eines Kreuzgelenks;
Figur 2: eine perspektivische Draufsicht eines zweiten Ausführungsbeispiels eines Kreuzgelenks und
Figur 3: eine perspektivische Seitenansicht eines Zapfenkreuzes, welches in den Kreuzgelenken nach den Figuren 1 oder 2 zum Einsatz kommen kann.

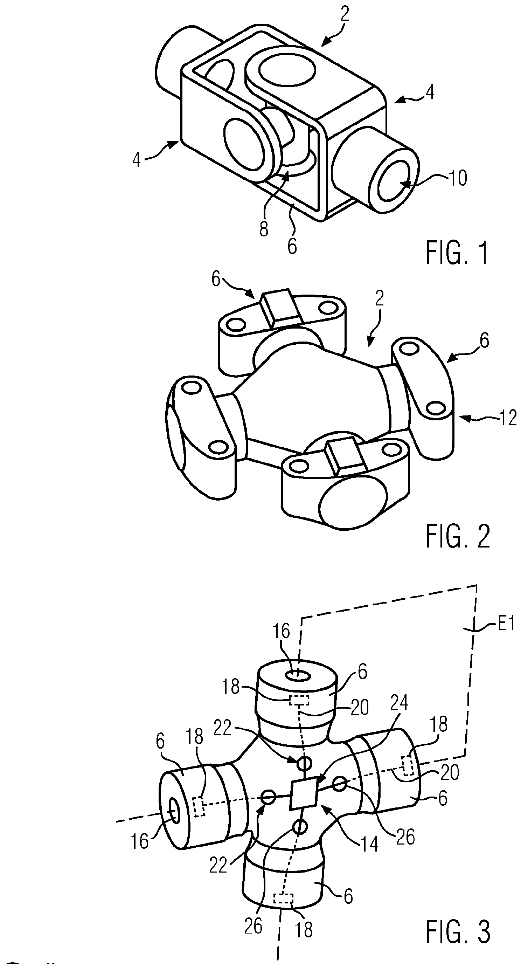

Die Figur 1 zeigt ein Beispiel eines Kreuzgelenkes 2 mit zwei gabelförmigen Mitnehmern 4, die jeweils an gegenüberliegenden Zapfen 6 eines Zapfenkreuzes 8 verschwenkbar gelagert sind. Die gabelförmigen Mitnehmer 4 weisen Aufnahmen 10 zur drehfesten Aufnahme eines nicht gezeigten Wellenkörpers auf.

Die Figur 2 zeigt ein alternatives Beispiel eines Kreuzgelenkes 2 mit einem Zapfenkreuz 8, dessen Zapfen 6 jeweils in Zapfenaufnahmen 12 aufgenommen sind, die über nicht gezeigte Befestigungsschrauben antriebs- bzw. abtriebsseitig befestigt werden können. Gegenüber dem Ausführungsbeispiel gemäß Figur 1 baut das in Figur 2 gezeigte Ausführungsbeispiel axial geringer auf. Beide Ausführungsbeispiele können indes die Erfindung verwirklichen, die nachstehend unter Bezugnahme auf Figur 3 erläutert wird.

Figur 3 zeigt ein Ausführungsbeispiel eines Zapfenkreuzes 8 mit vier Zapfen 6, die eine die Mittellängsachsen der Zapfen 6 enthaltende Ebene E1 definieren. Die Zapfen 6 ragen von einer mittleren Basis 14 ab und sind mit der Basis 14 in einem einheitlichen vorliegend geschmiedeten Bauteil verwirklicht. Die Oberfläche der Basis 14 ist im Wesentlichen unbearbeitet. Die Umfangsfläche der Zapfen 6 ist zur Aufnahme von Lagern abgedreht.

Wie Figur 3 erkennen lässt, ist die Basis 14 von sich kreuzenden Schmiermittelkanälen 16 durchsetzt. Innerhalb der abgedrehten Zapfen 6, d.h. umfänglich umgeben von der abgedrehten Lagerfläche des Zapfens 6 befindet sich ein nicht in Detail gezeigtes Sensorelement 18 zur Erfassung der Temperatur der Basis 14 an dieser Stelle. Die Anordnung des Sensorelementes 18 erfolgt dabei üblicherweise in dem Schmiermittelkanal 16 durch Ankleben des Sensorelementes 18 gegen die Innenumfangsfläche des Schmiermittelkanals 16. Eine mit dem Sensorelement 18 verbundene Datenleitung 20 ist durch eine mit Bezugszeichen 22 gekennzeichnete Bohrung von dem Inneren der Basis 14 nach außen geführt und datenmäßig mit einer Logik 24 in Form einer bestückten Leiterplatte verbunden, die im Mittelpunkt der Basis 14 außen auf die Basis 14 aufgebracht, beispielsweise aufgeklebt, ist. Die Bohrung 22 ist nach der Montage der Datenleitung 20 in der zuvor beschriebenen Weise mit einer aushärtenden Masse abgedichtet, die in die Bohrung 22 eingefügt und in Figur 3 mit Bezugszeichen 26 gekennzeichnet ist.

Die zu jedem der Zapfen 6 vorgesehenen Sensorelemente 18 sind datenmäßig jeweils mit der Logik 24 in der zuvor beschriebenen Weise gekoppelt. So wertet die Logik 24 die Messsignale jedes einzelnen Sensorelementes 18 aus.

### Bezugszeichenliste

- 2: Kreuzgelenk
- 4: Gabelförmiger Mitnehmer
- 6: Zapfen
- 8: Zapfenkreuz
- 10: Aufnahme
- 12: Zapfenaufnahmen
- 14: Basis
- 16: Schmiermittelkanal
- 18: Sensorelement
- 20: Datenkabel
- 22: Bohrung
- 24: Logik
- 26: abgedichtete Masse
- E1: die Mittellängsachsen der Zapfen 6 enthaltende Ebene

## Patentansprüche

1. Zapfenkreuz (8) eines Kreuzgelenks mit vier von einer Basis (14) abragenden Zapfen (6), mit zumindest einem an dem Zapfenkreuz befestigten Temperatursensor (18), **dadurch gekennzeichnet, dass** der Temperatursensor zumindest ein an dem Außenumfang einer der Zapfen (6) angeordnetes Sensorelement (18) aufweist.

2. Zapfenkreuz (8) nach Anspruch 1, **dadurch gekennzeichnet, dass** der Temperatursensor (18) an der Basis (14) befestigt ist.

3. Zapfenkreuz (8) nach einem der vorherigen Ansprüche, **gekennzeichnet durch** mehrere, jeweils einem Zapfen (6) des Zapfenkreuzes (8) zugeordnete, die Temperatur erfassende Sensorelemente (18).

4. Zapfenkreuz (8) nach einem der vorherigen Ansprüche, **gekennzeichnet durch** eine an dem Zapfenkreuz (8) befestigte Logik (24) zur Verarbeitung der Signale des Temperatursensors.

5. Zapfenkreuz (8) nach Anspruch 4, **dadurch gekennzeichnet, dass** die Logik (24) mit mehreren, die Temperatur erfassenden Sensorelementen (18) datenmäßig gekoppelt ist.

6. Zapfenkreuz (8) nach einem der Ansprüche 4 oder 5, **dadurch gekennzeichnet, dass** die Logik (24) einen Speicher und eine Auswerteeinheit aufweist, die Signale des Sensorelementes (18) auswertet und ein Ausgabesignal erzeugt, welches einen Störungszu.stand angibt.

7. Zapfenkreuz (8) nach Anspruch 6, **dadurch gekennzeichnet, dass** jedem der Zapfen (6) zumindest ein Sensorelement (18) zugeordnet ist, dass die Sensorelemente (18) über Datenleitungen (20) mit der Logik (24) datenmäßig verbunden sind und dass die Logik (24) einen Störungszustand anzeigt, wenn das Signal zumindest eines Sensorelementes (18) einen vorgegebenen Grenzwert überschreitet.

8. Zapfenkreuz (8) nach einem der Ansprüche 4 bis 7, **dadurch gekennzeichnet, dass** die Logik (24) und zumindest eines der Sensorelemente (18) auf einer gemeinsamen Leiterplatte montiert sind.

9. Zapfenkreuz (8) nach einem der Ansprüche 3 bis 8, **gekennzeichnet durch** eine der Logik (24) und/oder dem Sensorelement (18) zugeordnete Schutzabdeckung.

10. Kreuzgelenk (2) mit zwei gabelförmigen Mitnehmern (4), die jeweils an gegenüberliegenden Zapfen (6) eines Zapfenkreuzes (8) nach einem der Ansprüche 1 bis 9 verschwenkbar gelagert sind.

## Claims

1. A journal cross (8) of a universal joint comprising four journals (6) projecting from a base (14), at least one temperature sensor (18), which is fastened to the journal cross, **characterized in that** the temperature sensor includes at least one sensor element (18) disposed on the outer circumference of one of the journals (6).

2. The journal cross (8) according to claim 1, **characterized in that** the temperature sensor (18) is fastened to the base (14).

3. The journal cross (8) according to any one of the preceding claims, **characterized by** a plurality of sensor elements (18) for detecting the temperature, each assigned to a journal (6) of the journal cross (8).

4. The journal cross (8) according to any one of the preceding claims, **characterized by** a logic (24) fastened to the journal cross (8) for processing the signals of the temperature sensor.

5. The journal cross (8) according to claim 4, **characterized in that** the logic (24) is coupled data-wise to a plurality of sensor elements (18) for detecting the temperature.

6. The journal cross (8) according to any one of claims 4 or 5, **characterized in that** the logic (24) includes a memory and an evaluation unit which evaluates signals of the sensor elements (18) and generates an output signal which indicates a fault state.

7. The journal cross (8) according to claim 6, **characterized in that** at least one sensor element (18) is assigned to each of the journals (6), **in that** the sensor elements (18) are connected data-wise to the logic (24) via data lines (20), and **in that** the logic (24) indicates a fault state if the signal of at least one sensor element (18) exceeds a threshold value.

8. The journal cross (8) according to any one of claims 4 to 7, **characterized in that** the logic (24) and at least one of the sensor elements (18) are mounted on a common printed circuit board.

9. The journal cross (8) according to any one of claims 3 to 8, **characterized by** a protective cover associated with the logic (24) and/or the sensor element (18).

10. A universal joint (2) comprising two fork-shaped yokes (4) which are each mounted pivotally on opposite journals (6) of a journal cross (8) according to any one of claims 1 to 9.

## Revendications

1. Croisillon de Cardan (8) d'un joint de Cardan à quatre tourillons (6) dépassant d'une base (14) avec au moins un capteur de température (18) fixé au croisillon de Cardan, **caractérisé en ce que** le capteur de température comporte au moins un élément capteur (18) agencé sur la circonférence extérieure de l'un des tourillons (6).

2. Croisillon de Cardan (8) selon la revendication 1, **caractérisé en ce que** le capteur de température (18) est fixé à la base (14).

3. Croisillon de Cardan (8) selon l'une des revendications précédentes, **caractérisé par** plusieurs éléments capteurs de température (18), associés chacun à un tourillon (6) du croisillon de Cardan (8).

4. Croisillon de Cardan (8) selon l'une des revendications précédentes, **caractérisé par** un composant logique (24) fixé au croisillon de Cardan (8) pour traiter les signaux du capteur de température.

5. Croisillon de Cardan (8) selon la revendication 4, **caractérisé en ce que** le composant logique (24) est couplé en transmission de données à plusieurs éléments capteurs de température (18).

6. Croisillon de Cardan (8) selon l'une des revendications 4 et 5, **caractérisé en ce que** le composant logique (24) comporte une mémoire et une unité d'évaluation qui évalue les signaux de l'élément capteur (18) et génère un signal de sortie qui indique un état de panne.

7. Croisillon de Cardan (8) selon la revendication 6, **caractérisé en ce qu'**à chacun des tourillons (6) est associé au moins un élément capteur (18), **en ce que** les éléments capteurs (18) sont connectés en transmission de données au composant logique (24) via des lignes de données (20), et **en ce que** le composant logique (24) indique un état de panne quand le signal d'au moins un élément capteur (18) dépasse une valeur seuil prédéterminée.

8. Croisillon de Cardan (8) selon l'une des revendications 4 à 7, **caractérisé en ce que** le composant logique (24) et au moins l'un des éléments capteurs (18) sont montés sur un circuit imprimé commun.

9. Croisillon de Cardan (8) selon l'une des revendications 3 à 8, **caractérisé par** un capot de protection associé au composant logique (24) et/ou à l'élément capteur (18).

10. Joint de Cardan (2) comportant deux éléments d'entraînement en forme de fourche (4) qui sont montés chacun de manière pivotante sur des tourillons opposés (6) d'un croisillon de Cardan (8) selon l'une des revendications 1 à 9.
